# FASCICULE DE BREVET EUROPEEN

(11) **EP 0 517 577 B1**
(45) Date de publication et mention de la délivrance du brevet: **06.03.1996**
(21) Numéro de dépôt: 92401502.7
(22) Date de dépôt: 02.06.1992
(51) Int. Cl.: B27K 3/16, B27K 5/00, C04B 18/28

(54) **Procédé de traitement du bois sous forme divisée à destination de charge de béton**
Verfahren zur Behandlung von Holzspänen zur Verwendung als Betonzuschlagstoff
Process for the treatment of wood chippings to be used as a filler for concrete

(30) Priorité: 05.06.1991 FR 9106792
(43) Date de publication de la demande: 09.12.1992
(73) Titulaire: INDUSTRIE DU BOIS STABILISE - IBS, F-73310 Chindrieux (FR); Rudkiewicz, Francis, F-73310 Motz (FR); Granet, Robert, F-01350 Culoz (FR)
(72) Inventeur: Rudkiewicz, Francis, F-73310 Motz (FR); Granet, Robert, F-01350 Culoz (FR)
(74) Mandataire: Robert, Jean-Pierre

(56) Documents cités:
- EP-A- 0 384 815
- US-A- 5 019 170
- HOLZ ALS ROH- UND WERKSTOFF. vol. 45, no. 4, Avril 1987, BERLIN DE pages 131 - 136; M.H.SIMATUPANG ET AL: 'Einfluss der Lagerung von Pappel, Birkes, Eiche and Lärche sowie des Zusatzes von SiO2-Feinstaub auf die Biegefestigkeit zementgebundener Spanplatten'
- JAPANESE PATENTS GAZETTE Section Ch, Week 8528, 21 Août 1985 Derwent Publications Ltd., London, GB; Class L, Page 13, AN 85-167824/28 & JP-A-60096555

## Description

La présente invention concerne un procédé de préparation et de traitement du bois sous forme de particules en vue de son utilisation comme charge dans un béton, la charge et le béton oui sont obtenus.

On connaît l'intéret d'utiliser du bois sous forme de particules comme charge d'un béton. C'est d'abord un débouché économique pour certains sous-produits de l'exploitation forestière tels que les bois d'éclaircie, les déchets de scierie, les bois de taillis à cycle court...

C'est également l'utilisation du ciment comme liant beaucoup moins coûteuse que celle des résines ou des colles habituellement employées.

C'est enfin l'alliance des qualités du béton et de celles du bois: legèreté, bon comportement acoustique et thermique du bois, longévité et inaltérabilité du béton.

Il a donc déjà été proposé d'incorporer des particules de bois dans un béton, celles-ci ayant subi un traitement préalable afin de tenter de rendre le bois le plus possible inerte à l'égard du béton du point de vue physico-chimique.

Les différents traitements connus à ce jour, notamment par le document "HOLZ ALS ROH- und WERKSTOFF" p.133 § 1.3, ont pour but d'assurer la conservation ds bois dans l'aggloméré et de neutraliser l'action chimique de certaines de ses substances sur le ciment. Ils consistent à minéraliser le bois par une imprégnation des particules au moyen de solutions acides ou basiques telles que: chlorures, sulfates, lait de chaux, silicate de soude.... On a constaté que si ces traitements constituent réellement une barrière aux réactions chimiques, les sels sont de médiocre effet sur les échanges hygrométriques. Il résulte de celà plusieurs graves inconvénients.

Le bois étant très hydrophile, il est très difficile de réaliser une hydratation correcte du ciment autour des particules de bois. Il faut donc apporter une quantité importante d'eau pour saturer les particules de bois. Cet "excès" d'eau conduit à des temps de prise extrèmement longs et à un sèchage lent du béton. De plus, le bois en s'hydratant, change de dimensions (gonflement) puis se rétracte en libérant, lors du sèchage, une partie de l'eau qu'il a retenue. La dureté du bois a également changé; il n'est alors pas possible de maîtriser de manière certaine les caractéristiques du produit final obtenu. On a même constaté, dans certains cas, une inhibition de la prise que l'on impute à l'apparition de substances résultant de la réaction des composés alcalins sur certains composés du bois (hémicellulose).

Par la présente invention, on entend résoudre les problèmes rappelés ci-dessus par un traitement approprié des particules de bois qui puisse constituer une véritable prévention des réactions physico-chimiques néfastes entre bois, eau et ciment.

A cet effet la présente invention a pour premier objet un procédé de traitement du bois en particules destiné à être incorporé comme charge dans un béton, qui consiste à sècher le bois jusqu'à l'obtention d'un taux d'hygrométrie résiduelle de l'ordre de 10 à 15% correspondant au taux de sèchage naturel et à l'équilibre sous abri, et enrober les particules ainsi sèchées de fumée de silice.

Le sèchage pourra se faire de manière naturelle ou à l'aide d'un traitement thermique adapté.

La fumée de silice, incorporée aux particules par malaxage, forme une barrière efficace de protection du bois s'opposant aux échanges physico-chimiques de celui-ci avec le milieu environnant, ou du moins retardant ces échanges pendant un temps suffisamment long pour que la phase aqueuse du mélange, celle qui véhicule les agents réactifs indésirables dans le bois, ait disparu.

De manière préférée, l'enrobage par la fumée de silice est fixé par pulvérisation d'une solution de silicate de soude.

Un second objet de l'invention est une charge pour béton constituée par du bois divisé en particules enrobées de fumée de silice. Le bois peut être divisé sous forme de sciure ou peut être sous forme d'éclats ou copeaux de taille beaucoup plus importante. L'hygrométrie résiduelle de ces particules sera de l'ordre de 10 à 15%.

On rappellera que la fumée de silice est un sous-produit de la métallurgie du silicium qui consiste en de très fines particules (microsphères de diamètre moyen de l'ordre de 0,1µm) de SiO₂ (avec jusqu'à 15% d'autres composés de granulométrie semblable). Un domaine d'utilisation nouvellement exploré de cette fumée de silice est constitué par son emploi comme additif dans les bétons se substituant partiellement au ciment car possèdant des propriétés hydrauliques et pouzzolaniques (voir docment "HOLZ..." p.133).

On comprend que l'une des premières fonctions de cette fumée de silice est le colmatage mécanique des pores du bois, dont la taille (30 à 50 µm) est très nettement supérieure à celle des sphères de silice. On crée ainsi un obstacle mécanique à la capillarité freinant considérablement la pénétration du milieu aqueux du béton dans le bois.

Une autre fonction de cette fumée de silice autour des particules de bois est d'ordre chimique. En effet, cette matière présente un caractère pouzzolanique par sa capacité à réagir avec la chaux, libérée au cours de l'hydratation du ciment, pour former des silicates calciques hydratés. Le caractère pouzzolanique de la fumée de silice est par ailleurs "activé" par le silicate de soude utilisé comme fixateur par pulvérisation des particules malaxées avec la fumée de silice. La chaux est ainsi empèchée, physiquement et chimiquement, de migrer dans les pores du bois où, attaquant les composés cellulosiques sensibles aux composés alcalins, elle pourrait former des substances inhibitrices de prise. Le bois est ainsi protégé de cette attaque des sustances alcalines.

Le caractère hydrophile du bois ainsi traité est très réduit; il n'est donc pas nécessaire de prévoir un "excès" d'eau pour assurer l'hydratation du ciment voisin des particules de bois. Cette quantité moindre d'eau est avantageuse car le bois, restant sec, reste dur et le mélange est compressible; il peut être mis en oeuvre dans des installations de moulage à compression ou vibrantes. Cette quantité moindre d'eau est également à l'origine d'une variation dimensionnelle moins importante que dans les bétons de bois connus.

Par ailleurs, on notera que le matériau d'interface bois/ciment est très finement divisé et offre de ce fait de nombreux sites de réactions chimiques et d'accrochages physiques liant le bois et le ciment. Cette bonne liaison, en outre durable, est à l'origine de caractéristiques mécaniques améliorées par rapport à celles médiocres des bétons de bois connus à ce jour.

Le produit traité conformément à l'invention, présente d'une part l'avantage d'être stable en poids puisque rendu peu sensible à l'humidité, ce qui permet de réaliser des dosages pondéraux précis et d'autre part, de pouvoir être utilisé comme une charge conventionnelle, c'est-à-dire être mélangé à sec avec le ciment préalablement au mouillage.

Il faut enfin noter que la granulométrie de cette charge peut varier dans des proportions considérables, depuis la sciure jusqu'à des copeaux ou éclats de plusieurs centimètres.

## Revendications

1. Procédé de traitement du bois en particules destiné à être incorporé comme charge dans un béton, caractérisé en ce qu'il comporte les phases de:
- sècher le bois jusqu'à l'obtention d'un taux d'hygrométrie de l'ordre de 10 à 15% correspondant au taux de sèchage naturel et à l'équilibre sous abri,
- enrober les particules ainsi sèchées avec de la fumée de silice.

2. Procédé selon la revendication 1, caractérisé en ce que l'enrobage de fumée de silice est réalisé par malaxage.

3. Procédé selon la revendication 1 ou la revendication 2, caractérisé en ce que l'enrobage de fumée de silice est suivi d'une étape de fixation par pulvérisation d'une solution de silicate de soude.

4. Charge pour béton obtenu par le procédé de la revendication 1 caracterisée en ce qu'elle est constituée par du bois divisé en particules enrobées de fumée de silice.

5. Charge selon la revendication 4, caractérisée en ce que la dimension moyenne des particules de bois est comprise entre un millimètre et plusieurs centimètres.

## Claims

1. A process for the treatment of wood in particle form which is intended to be incorporated as a filler in a concrete, characterised in that the process comprises the phases of:
- drying the wood until attaining a degree of relative humidity of the order of 10 to 15% corresponding to the degree of natural drying and to equilibrium in a sheltered condition, and
- encasing the particles dried in that way with silica vapour.

2. A process according to claim 1 characterised in that the silica vapour encasing step is effected by malaxation.

3. A process according to claim 1 or claim 2 characterised in that the silica vapour encasing step is followed by a step for fixing by spraying a solution of sodium silicate.

4. A filler for concrete obtained by the process of claim 1 characterised in that it is formed by wood divided into particles encased with silica vapour.

5. A filler according to claim 4 characterised in that the mean dimension of the particles of wood is between a millimetre and several centimetres.

## Patentansprüche

1. Verfahren zur Behandlung von Holzpartikeln, die zur Zugabe als Zuschlagsstoff für Beton bestimmt sind, dadurch **gekennzeichnet**, daß das Verfahren folgende Phasen umfaßt:
- Trocknen des Holzes, bis man einen Feuchtigkeitsgehalt in der Größenordnung von 10 bis 15 % erhält entsprechend dem natürlichen Trocknungsgrad und dem Gleichgewicht unter Dach und
- Einhüllen der so getrockneten Partikel mit Siliciumdioxydrauch.

2. Verfahren nach Anspruch 1, dadurch **gekennzeichnet**, daß das Einhüllen mit Siliciumdioxydrauch durch Mischen erfolgt.

3. Verfahren nach Anspruch 1 oder 2, dadurch **gekennzeichnet**, daß auf das Einhüllen mit Siliciumdioxydrauch ein Fixierungsschritt durch Zerstäuben einer Natronsilikatlösung folgt.

4. Zuschlagsstoff für Beton, der durch ein Verfahren nach Anspruch 1 erhalten wird, dadurch **gekennzeichnet**, daß er aus in Partikel zerteiltem Holz besteht, die von Siliciumdioxydrauch umhüllt sind.

5. Zuschlagsstoff nach Anspruch 4, dadurch **gekennzeichnet**, daß die mittlere Abmessung der Holzpartikel zwischen einem Millimeter und mehreren Zentimetern beträgt.
